# EUROPÄISCHE PATENTSCHRIFT

(11) **EP 0 649 890 B1**
(45) Veröffentlichungstag und Bekanntmachung des Hinweises auf die Patenterteilung: **08.08.2001**
(21) Anmeldenummer: 94116573.0
(22) Anmeldetag: 20.10.1994
(51) Int. Cl.: C09D 167/00

(54) **Wärmehärtbares Beschichtungs-System**
Heat-curable coating composition
Composition de revêtement thermodurcissable

(30) Priorität: 20.10.1993 DE 4335845
(43) Veröffentlichungstag der Anmeldung: 26.04.1995
(73) Patentinhaber: EMS-INVENTA AG, 8001 Zürich (CH)
(72) Erfinder: Hoppe, Manfred, Dr. rer. nat., CH-7000 Chur (CH); Kaplan, Andreas, Dr. rer. nat., CH-7000 Chur (CH); Kinkelin, Eberhard, Dr. rer.nat., CH-7000 Chur (CH)
(74) Vertreter: Becker Kurig Straus

(56) Entgegenhaltungen:
- EP-A- 0 107 888
- EP-A- 0 322 834
- WO-A-91/14745
- DE-A1- 4 032 855

## Beschreibung

Die Erfindung betrifft epoxidfreie wärmehärtbare, besonders witterungsbeständige Beschichtungssysteme auf der Basis von carboxylfunktionellen Polyesterharzen und β-Hydroxyalkylamiden, deren Herstellung und Verwendung sowie Schutzschichten aus diesen Beschichtungssystemen.

Wärmehärtbare Pulverlacke geben bei der Applikation keine organischen Lösungsmittel ab und besitzen deshalb gegenüber Flüssiglacken eindeutig ökologische Vorteile. Die Vernetzung in der Wärme erfolgt über Polyadditions- oder Polykondensationsreaktionen zwischen den in den Bindemittelsystemen enthaltenen funktionellen Gruppen. Typische Bindemittelsysteme sind Epoxidharze/Härter, Polyester/Epoxide, Polyester/Isocyanate, Acrylate/Epoxide, Acrylate/Isocyanate, Acrylate/ Dicarbonsäuren. Diese Bindemittelsysteme unterscheiden sich neben den lacktechnischen Eigenschaften besonders auch in der Beständigkeit bei Aussenbewitterung von einander und es hat deshalb nicht an Bemühungen gefehlt, Bindemittelsysteme für Pulverlacke zu entwickeln, die eine besonders gute Aussenwitterungsbeständigkeit aufweisen. Die günstigsten Ergebnisse liefern hier Pulverlacke auf Basis von Acrylat-Systemen, doch besitzen diese nur ungenügende lacktechnische Eigenschaften oder verursachen eine nicht akzeptable Kontaminierung anderer Pulverlacksysteme, weshalb sie nur sehr beschränkt eingesetzt werden.

In DE 21 63 962 C1 werden Polyester/Epoxid-Pulverlacke mit nur 4 bis 25 Gew% Polyepoxidharz vorgeschlagen, die aufgrund des geringen Polyepoxidgehaltes eine verbesserte Aussenwitterungsbeständigkeit aufweisen sollen. Die in dieser Patentschrift beschriebenen festen Polyesterharze mit einer Säurezahl von 30 bis 100 bestehen aus dem Reaktionsprodukt eines Anhydrids einer wenigstens dreibasischen, organischen Carbonsäure oder einer Mischung dieses Anhydrids mit bis zu 50 Mol% eines Anhydrids einer zweibasischen, gesättigten oder ungesättigten, aliphatischen, aromatischen oder cycloaliphatischen Carbonsäure und eines Polyesterharzes mit einer Hydroxylzahl von 15 bis 50. Die zur Herstellung dieses Polyesterharzes verwendeten aromatischen Carbonsäuren umfassen o-Phthalsäure, Terephthalsäure, Isophthalsäure oder deren Ester mit niedrigen aliphatischen Alkoholen sowie bis zu 10 Mol% mehrbasische, aliphatische Carbonsäuren, wie z.B. Adipinsäure, oder dreibasische, aromatische Carbonsäuren, wie z.B. Trimellithsäure oder Pyromellithsäure. Die bevorzugte zweiwertige aromatische Carbonsäure ist Terephthalsäure.

Die verwendeten Diole umfassen alkoxyliertes 4,4-Isopropylidendiphenol, wobei die durchschnittliche Anzahl der Oxyethylen- oder Oxypropylengruppen 2 bis 6 beträgt, Glycidylester und/oder zweiwertige Alkohole, wie z.B. 2,2-Dimethylpropandiol-1,3, Propylenglykol-1,2, 1,4-Cyclohexandimethanol, Ethylenglykol oder Diethylenglykol. Weiterhin können bis zu 10 Mol% aliphatische, dreiwertige oder mehrwertige Alkohole, wie z.B. Trimethylolpropan oder Pentaerythrit verwendet werden.

Die Herstellung des hydroxylfunktionellen Polyesterharzes erfolgt nach bekannten Verfahren durch Erhitzen sämtlicher Reaktionsteilnehmer unter Rühren bis zu einer Temperatur von ca. 240°C und Entfernen des während der Vernetzungsreaktion gebildeten Wassers, gegen Ende der Reaktion unter Vakuum. Die Umsetzung des so erhaltenen Hydroxylgruppen enthaltenen Polyesterharzes mit dem Anhydrid der mehrbasischen Carbonsäure zu einem carboxylfunktionellen Polyesterharz erfolgt dann während 1 bis 3 Stunden bei 180 bis 250°C unter einer inerten Gas-Atmosphäre.

Als Polyepoxidverbindung wird bevorzugt Trisglycidylisocyanurat (TGIC) verwendet.

DE 26 18 729 C1 beschreibt hitzehärtbare Pulverlacke aus carboxylierten Polyesterharzen und Epoxidverbindungen, wobei die verwendeten carboxylierten Polyesterharze die gleichen Monomerkomponenten, wie in DE 21 63 962 C1 beschrieben, enthalten, sich jedoch im Herstellverfahren unterscheiden. Nach DE 26 18 729 C1 wird die mindestens dreibasische, aromatische Carbonsäure bereits während der ersten Stufe, d.h. während der Herstellung des Hydroxylgruppen enthaltenen Polyesterharzes eingebaut und die Umsetzung zum carboxylfunktionellen Polyesterharz erfolgt anschliessend durch Reaktion mit Isophthalsäure. Der Vorteil dieses Verfahrens wird mit verbesserten Verlauf- und lacktechnischen Eigenschaften daraus hergestellter Pulverlacke begründet.

Eine andere Patentschrift, US-A- 4 379 895, beschreibt ebenfalls die Herstellung sogenannter säureverkappter Polyesterharze für Polyester/Epoxid-Pulverlacke unter Verwendung der gleichen Monomerkomponenten wie in den obengenannten Patentschriften vorgeschlagen. Die Unterscheidung liegt auch hier im wesentlichen nur im Herstellverfahren.

Obwohl sämtliche bisher angeführten Patentschriften auch die Mitverwendung von Isophthalsäure als Monomerkomponente beschreiben, wird als aromatische Carbonsäure bevorzugt Terephthalsäure verwendet und es fehlt jeder Hinweis darauf, dass durch die bevorzugte Verwendung von Isophthalsäure Polyester/Epoxid-Pulverlacke mit wesentlich verbesserter Witterungsbeständigkeit erhalten werden können. Ein Hindernis waren die bei Verwendung von Isophthalsäure im Vergleich zu Terephthalsäure sehr viel schlechteren lacktechnischen Eigenschaften, insbesondere die ungenügende Schlagfestigkeit.

DE-A-40 32 855 beschreibt Pulverlacke mit guter UV-Beständigkeit in Kombination mit guten mechanischen Eigenschaften nach relativ kurzen Härtungszeiten, umfassend ein Polyesterharz mit einer Säurezahl von 15 bis 70 und einer Hydroxylzahl kleiner als 10, eine Polyepoxidverbindung und übliche Additive. Das Poly-esterharz besteht im wesentlichen aus Dicarbonsäuren, Glykolen und Monomeren der Funktionalität 3 oder höher, wobei als Dicarbonsäuren mindestens 15 Mol% Isophthalsäure und mindestens 5 Mol% 1,4-Cyclohexandicarbonsäure und als Glykole mindestens 50 Mol% verzweigte, aliphatische Glykole mit 5 bis 11 Kohlenstoffatomen und höchstens 50 Mol% aliphatische Glykole mit 2 bis 6 Kohlenstoffatomen verwendet werden und worin die Monomeren mit einer Funktionalität von 3 oder höher in einer Menge von höchstens 8 Mol% der Dicarbonsäure plus Glykole enthalten sind. Besonders gute Ergebnisse werden mit 75 bis 90 % IPS und 10 bis 25 Mol% 1,4-Dicyclohexandicarbonsäure erhalten.

Das als Vernetzungsmittel vorgeschlagene Epoxidharz besitzt eine Funktionalität von 2 oder mehr, und es werden vorzugsweise Epoxidverbindungen ohne phenolische Kohlenstoff-Sauerstoffbindung verwendet, da diese Bindung besonders lichtempfindlich ist. Bevorzugte Polyepoxidverbindungen sind daher Trisglycidylisocyanurat (TGIC), Diglycidylterephthalat oder Diglycidylhexahydrophthalat.

In EP-A-0 522 648, werden witterungsbeständige Pulverlacke aus glycidfunktionellen Acrylaten und carboxylfunktionellen Polyesterharzen mit ähnlicher Zusammensetzung, wie in DE-A-40 32 855 beschrieben, vorgeschlagen. Derartige Pulverlacken genügen jedoch aufgrund der ungenügenden mechanischen Eigenschaften und der Kontaminiergefahr nicht den Anforderungen des Marktes.

Ebenfalls witterungsstabile Pulverlacke auf Basis von carboxylfunktionellen Polyesterharzen und Polyepoxidverbindungen, wie z.B. Trisglycidylisocyanurat (TGIC), werden in der Patentschrift US-A-5 097 006 und EP-A-0 561 102 beschrieben. Die hier verwendeten Polyesterharze bestehen aus vorwiegend Cyclohexandicarbonsäure, 10 bis 100 Mol-% cycloaliphatischen Diolen, vorzugsweise hydriertem Bisphenol A oder Gemischen davon und 90 bis 0 Mol% verzweigten Glykolen oder Polyolen mit bis zu 12 Kohlenstoffatomen, z.B. 2,2-Dimethyl-1,3-propandiol.

Der wesentliche Nachteil sämtlicher zur Herstellung witterungsbeständiger Pulverlacken angeführten Patentschriften ist jedoch die Verwendung von Polyepoxidverbindungen, vorzugsweise Trisglycidylisocyanurat (TGIC), als Vernetzer. Polyepoxidverbindungen und besonders TGIC besitzen aber ein hohes toxisches Potential und sind deshalb in Pulverlacken, die sich ansonsten durch ihre hervorragende ökologischen und toxikologischen Eigenschaften auszeichnen, nicht mehr akzeptiert.

In US-A-4 076 917 werden epoxidfreie Bindemittelsysteme aus carboxylfunktionellen Polymeren, die jedoch keine Esterbindungen enthalten, und β-Hydroxyalkylamiden beschrieben, und es wird u.a. auch auf die Verwendungsmöglichkeit derartiger Bindemittelsysteme als Pulverlack verwiesen. Die Vernetzung erfolgt durch Reaktion der β-ständigen Hydroxylgruppen des Alkanolamids mit Carboxylgruppen. Im Vergleich zu Polyepoxidverbindungen sind β-Hydroxyalkylamide toxikologisch absolut unbedenklich. Zur Erreichung sehr guter Witterungsbeständigkeiten sind jedoch ähnlich wie bei der Verwendung von TGIC, carboxylfunktionelle Polyester erforderlich, die als Dicarbonsäure vorzugsweise Isophthalsäure enthalten und dadurch nur ungenügende mechanische Eigenschaften aufweisen.

In der WO-A- 91/14745 werden witterungsstabile Pulverlacke aus carboxylfunktionellen Polyesterharzen mit hohem Isophthalsäureanteil und aus β-Hydroxyalkylamiden als Vernetzer beschrieben, die mit semikristallinen Polyestern mit einer Säurezahl zwischen 10 und 70 m KOH/g modifiziert sind, um die ungenügenden mechanischen Eigenschaften zu verbessern. Die niedrige Glasumwandlungstemperatur der semikristallinen Polyester bewirkt jedoch eine unzureichende Lagerstabilität solcher Pulverlacke. Darüberhinaus wird bereits durch geringe Anteilmengen Terephthalsäure im semikristallinen Polyester die UV-Beständigkeit der Beschichtungssysteme verringert.

Nach dem Stand der Technik wird also bisher kein Bindemittelsystem vorgeschlagen, dass die Anforderungen hinsichtlich Toxizität, erhöhte Witterungsbeständigkeit, genügender Lagerstabilität und gute lacktechnische Eigenschaften in einem Produkt vereinigt.

Aufgabe der vorliegenden Erfindung ist es, ein toxikologisch unbedenkliches Beschichtungssystem bereitzustellen, das möglichst alle Anforderungen an die Witterungsbeständigkeit, guter Lagerstabilität und die Verlaufs- und mechanischen Eigenschaften in hohem Masse erfüllt.

Gelöst wurde diese Aufgabe durch die Entwicklung eines wärmehärtbaren, epoxidgruppenfreien, witterungsbeständigen Beschichtungs-Systems auf Basis von carboxylfunktionellen Polyesterharzen und β-Hydroxyalkylamiden mit sehr guten lacktechnischen Eigenschaften, ausgezeichneten Verlaufseigenschaften und mit guter Lagerstabilität nach den Merkmalen des Anspruchs 1 bzw. durch das Verfahren nach Anspruch 12 bzw. durch die Verwendung nach den Ansprüchen 13 und 14 bzw. durch die Schutzschicht nach Anspruch 15.

Die Erfindung betrifft im speziellen ein Beschichtungssystem aus mindestens einem spezifischen gesättigten Polyester als Bindemittel-Harz a), welcher sich dadurch in besonderer Weise auszeichnet, dass er aus aliphatischen Diolen und vorwiegend Isophthalsäure aufgebaut ist, welche durch nicht mehr als 20 Mol-%, bezogen auf die gesamte Säuremenge, andere aliphatische oder cycloaliphatische Dicarbonsäuren oder Polycarbonsäuren oder deren Anhydride ersetzt sein darf und β-Hydroxyalkylamide als Vernetzer b).

Das Polyesterharz a) hat eine Säurezahl von 15 bis 75 mg KOH/g, eine OH-Zahl von maximal 10 mg KOH/g und eine Glasumwandlungstemperatur von grösser als 45°C. Der Vernetzer b) ist mindestens ein β-Hydroxyalkylamid mit mindestens zwei β-Hydroxyalkylamidgruppen. Im Beschichtungssystem können die für die Herstellung und die Verwendung von Pulverlacken üblichen Additive (c) zusätzlich vorhanden sein.

Die Diole des Polyesterharzes bestehen zu 0 bis 10 Mol-% der gesamten Diolmenge aus mindestens einem linearen Diol mit mindestens 4 C-Atomen und zu mindestens 50 Mol-% aus mindestens einem verzweigten aliphatischen Diol mit mindestens 4 C-Atomen sowie zu maximal 50 Mol-% aus mindestens einem linearen aliphatischen Diol mit weniger als 4 C-Atomen und/ oder mindestens einem cycloaliphatischen Diol, wobei der gesättigte Polyester weitelnin aus bis zu 6 Mol-%, bezogen auf die gesamte Säure- und Diolmenge, eines Kombination der trifunktionellen Monomere Trimethylolpropan und Trimellithsäureanhydrid auf gebaut ist.

Das carboxylfunktionelle Polyesterharz ist aus mindestens 80 Mol-% Isophthalsäure und maximal 20 Mol-% einer oder mehrerer aliphatischer oder cycloaliphatischer Dicarbonsäuren aufgebaut, wobei aliphatische Dicarbonsäuren mit 6 bis 22 C-Atomen, wie Adipinsäure, Azelainsäure, Sebazinsäure und Dodecandisäure bevorzugt sind. Bevorzugte cycloaliphatische Säuren sind Cyclohexandicarbonsäuren. In einer bevorzugten Ausführungsform werden die Polyesterharze aus mindestens 2, bevorzugt aber 3 bis 7 Mol-% linearer aliphatischer Diole mit mindestens 4 C-Atomen aufgebaut, wobei Hexandiol-1,6 und Diole mit 12 bis 20 C-Atomen besonders und ganz besonders solche mit 13 bis 15 C-Atomen bevorzugt sind. Bevorzugtes verzweigtes Diol mit mehr als 4 C-Atomen ist das 2,2-Dimethyl-1,3-propandiol.

Eine besonders vorteilhafte Diolzusammensetzung besteht aus 3-7 Mol-% linearer Diole mit mindestens 4 C-Atomen, mindestens 75 Mol-% verzweigter Diole mit mindestens 4 C-Atomen sowie maximal 22 Mol-% linearer Diole mit weniger als 4 C-Atomen.

Die β-Hydroxyalkylamide als Vernetzerkomponente b) müssen mindestens zwei β-Hydroxyalkylamidgruppen pro Molekül enthalten und sind im wesentlichen durch die allgemeine Formel (I) charakterisiert: 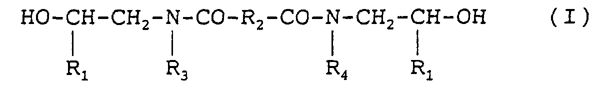 in der
- R₁: gleiche oder verschiedene Alkylreste mit 1 bis 4 C-Atomen oder Wasserstoff,
- R₂: ein aliphatischer, cycloaliphatischer, araliphatischer oder aromatischer Rest,
- R₃ und R₄: 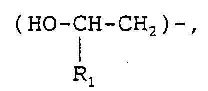 oder gleiche oder unterschiedliche Alkylreste mit 1 bis 4 C-Atomen oder Wasserstoff sind.

Für die Verwendung in Pulverlacken bevorzugte β-Hydroxyalkylamide sind:
- Bis[N,N'-di(β-hydroxyethyl)]-adipamid oder Bis[N,N'-di(β-hydroxypropyl)]-adipamid

Besonders bevorzugt wird Bis[N,N'-di(β-hydroxyethyl)]-adipamid. Es kann als technisches Produkt noch geringe Anteile an Di- und Trimeren enthalten. Oberhalb 140°C vernetzt es rasch mit dem Bindemittelharz, den carboxylfunktionellen Polyesterharzen, und ergibt sehr gute lacktechnische Eigenschaften.

Zur Erreichung guter lacktechnischer Eigenschaften werden pro Carboxylgruppe des carboxylfunktionellen Polyesterharzes 0,5 bis 1,5, vorzugsweise 0,8 bis 1,2 β-Hydroxyalkylamidgruppen benötigt.

Bei den für die Herstellung und die Verwendung von Pulverlacken üblichen Additiven (C) handelt es sich um Pigmente, Füllstoffe, Verlauf- und Entgasungshilfsmittel, Hitze-, UV-und/oder HALS-Stabilisatoren oder Tribo-Additive sowie erforderlichenfalls um Mattierungsadditive, wie z.B. Wachse.

Die Herstellung der erfindungsgemässen carboxylfunktionellen Polyesterharze erfolgt nach bekannter Art durch gemeinsames Erhitzen sämtlicher monomeren Komponenten in Anwesenheit üblicher Veresterungskatalysatoren auf eine Temperatur bis ca. 250°C und Abtrennen des entstandenen Reaktionswassers oder nach einem zweistufigen Verfahren, bei welchem in einer ersten Stufe in Gegenwart eines Polyolüberschusses ein hydroxylfunktioneller Polyester gebildet wird und in einer zweiten Stufe dieser mit einer oder mehreren mehrbasischen Carbonsäuren oder deren Anhydrude zu einem carboxylfunktionellen Polyesterharz umgesetzt wird.

Die Herstellung der erfindungsgemässen Beschichtungssysteme erfolgt vorzugsweise in der Schmelze durch gemeinsame Extrusion sämtlicher Komponenten des Beschichtungssystems bei Temperaturen zwischen 80 bis 130°C. Das Extrudat wird anschliessend abgekühlt, gemahlen und auf eine Korngrösse kleiner als 90 µm abgesiebt. Grundsätzlich sind auch andere Verfahren zur Herstellung der Beschichtungssysteme geeignet, wie z.B. Vermischen der Komponenten in Lösung und anschliessende Ausfällung oder destillative Entfernung der Lösemittel, doch besitzen diese Verfahren keine praktische Bedeutung.

Die Anwendung der erfindungsgemässen Beschichtungssysteme erfolgt nach den für Pulverlacke üblichen Verfahren, z.B. mittels elektrostatischer Pulversprühvorrichtungen nach dem triboelektrischen oder Corona-Verfahren oder nach den Wirbelbett-Verfahren etc.

Die erfindungsgemässen wärmehärtbaren epoxidgruppenfreien Beschichtungssysteme besitzen gute Lagerstabilität und zeigen nach Vernetzung bei 150 bis 200°C sehr gute Verlaufsund mechanische Eigenschaften. Sie zeichnen sich durch eine aussergewöhnlich gute Witterungs- und UVB-Beständigkeit aus und sind zudem toxikologisch absolut unbedenklich. Sie vereinigen also gegenüber dem Stand der Technik in idealer Weise die Anforderungen, die an ökologisch einwandfreie Beschichtungs-Materialien gestellt werden.

Entgegen den Erfahrungen aus dem Stand der Technik zeigen die erfindungsgemässen Beschichtungssysteme sehr gute mechanische Eigenschaften in Kombination mit gutem Verlauf trotz des hohen Anteils an Isophthalsäure, der jedoch für eine hohe Witterungsbeständigkeit unerlässlich ist.

Das wird insbesondere durch die Kombination von hohen schlagfestigkeits Werten I10' bzw I 20' von mindestens 150, insbesondere mindestens 160 und QUV-Werten von mindestens 550 belegt, wie sie die Ergebnisse der Beispiele 1 bis 16 in Tabelle 1a und 1b zeigen.

Die Herstellung und die Eigenschaften der carboxylfunktionellen, spezifischen Polyesterharze sowie der Beschichtungssysteme werden durch die folgenden Beispiele dargestellt:

### Beispiel 1 (2-Stufenverfahren)

In einen 2 1 Veresterungsreaktor, versehen mit Temperaturfühler, Rührer, Rückflusskolonne und Destillationsbrücke, werden alle Diole vorgelegt und bei 140°C unter einer während der ganzen Reaktion aufrechterhaltenen inerten Stickstoffatmosphäre aufgeschmolzen. Unter Rühren werden die weniger reaktiven Disäuren (Molverhältnis Disäure / Diol ca. 1 : 1.12) sowie gegebenenfalls ein Veresterungskatalysator zugegeben und die Innentemperatur wird schrittweise auf 235°C erhöht. Die Reaktion wird fortgesetzt, bis kein Destillat mehr entsteht und die Säurezahl weniger als 10 mg KOH/g beträgt. Danach werden die reaktiveren Disäuren zugegeben und die Veresterung wird bis zum Erreichen der gewünschten Säurezahl fortgesetzt. Ein Teil dieser zweiten Stufe wird eventuell unter vermindertem Druck (< 100 mbar) durchgeführt.

### Beispiel II (1-Stufenverfahren)

In einen 2 1 Veresterungsreaktor, versehen mit Temperaturfühler, Rührer, Rückflusskolonne und Destillationsbrücke, werden alle Diole vorgelegt und bei 140°C unter einer während der ganzen Reaktion aufrechterhaltenen inerten Stickstoffatmosphäre aufgeschmolzen. Sind alle Disäuren in ähnlichem Masse aktiv, werden alle Säuren sowie gegebenenfalls ein Veresterungskatalysator unter Rühren zugegeben und die Innentemperatur wird schrittweise auf 235°C erhöht. Die Reaktion wird solange fortgesetzt, bis kein Destillat mehr entsteht und die gewünschte Säurezahl erreicht ist. Der letzte Teil dieses Verfahrens wird eventuell unter vermindertem Druck (<13,300 Pa (<100 mbar)) durchgeführt.

### Herstellung der Beschichtungssysteme

Für sämtliche in Tabelle 1 beschriebenen Polyesterharze wurde die nachfolgende Formulierung verwendet:

| | | |
|---|---|---|
| 542,8 | Gew.T | Polyesterharz |
| 47,2 | Gew.T | Primid®XL-552 ¹⁾ |
| 400,0 | Gew.T | Titandioxid Kronos 2160 |
| 8,0 | Gew.T | Resiflow® PV 88 ²⁾ |
| 2,0 | Gew.T | Benzoin |
| 100,0 | Gew.T | |

| | | |
|---|---|---|
| 1) Bis[N,N'-di(β-hydroxyethyl)]adipamid Handelsprodukt der Fa. Röhm & Haas | | |
| 2) Verlaufmittel auf Polyacrylat-Basis, Handelsprodukt der Fa. Worlé-Chemie GmbH | | |

Die Formulierungsbestandteile werden in einem Henschel-Mischer bei 700 U.min⁻¹ (Upm) während 30 Sek. trocken gemischt und anschliessend auf einem Buss-Co-Kneter (PLK 46) bei einer Manteltemperatur von 100°C, gekühlter Schnecke und einer Schneckenumdrehung von 150 U·min⁻¹ (Upm) extrudiert. Das Extrudat wird gekühlt, gemahlen und auf kleiner als 90 *µ*m abgesiebt.

Die lacktechnischen Prüfungen erfolgen auf mit Trichlorethan entfetteten Stahlblechen (Dicke 0,8 mm) bei einer Einbrenntemperatur von 180°C und einer Lackfilmdicke von 60 bis 80 *µ*m.

**Tabelle 1a**

| Beispiel | 1 | 2 (Vgl.) | 3 (Vgl.) | 4 | 5 | 6 Vergleich | 7 Vergleich | 8 |
|---|---|---|---|---|---|---|---|---|
| TPS | | 10.0 | 10.0 | | | | | |
| IPS | 88.0 | 78.0 | 88.0 | 98.0 | 88.0 | 90.0 | 86.0 | 98.0 |
| ADI | | | | | | | | |
| CHDS | 10.0 | 10.0 | | | 10.0 | 10.0 | 10.0 | |
| TMA | 2.0 | 2.0 | 2.0 | 2.0 | 2.0 | | 4.0 | 2.0 |
| NPG | 82.8 | 82.9 | 83.0 | 82.8 | 87.8 | 78.9 | 86.9 | 88.0 |
| EG | | | | | | | | |
| HD | 5.0 | 5.0 | 5.0 | 5.0 | | 5.0 | 5.0 | |
| C₁₂₋₁₄Diol | | | | | | | | |
| TMP | 2.0 | 2.0 | 2.0 | 2.0 | 2.0 | 4.0 | | 2.0 |
| SZ | 48 | 51 | 52 | 51 | 51 | 50 | 51 | 51 |
| SV | 11 | 21 | 29 | 14 | 12 | 14 | 11 | 19 |
| TG_{PES} | 58 | 59 | 62 | 61 | 62 | 58 | 57 | 66 |
| TG_{PL} | 55 | 56 | 59 | 58 | 59 | 55 | 54 | 62 |
| I 10' | (160) 18,08 | (160) 18,08 | (160) 18,08 | (160) 18,08 | (160) 18,08 | (160) 18,08 | (160) 18,08 | (160) 18,08 |
| I 20' | (160) 18,08 | (160) 18,08 | (160) 18,08 | (160) 18,08 | (160) 18,08 | (160) 18,08 | (160) 18,08 | (160) 18,08 |
| E 10' | 10 | 10 | 10 | 9.9 | 3.4 | 10 | 10 | 2.8 |
| E 20' | 10 | 10 | 10 | 9.9 | 4.1 | 10 | 10 | 3.5 |
| VERL | 1-2 | 2-3 | 3-4 | 3-4 | 2 | 4-5 | 1 | 3-4 |
| QUV | 740 | 580 | 560 | 730 | 755 | 770 | 540 | 760 |

**Tabelle 1b:**

| Beispiel | 9 | 10 | 11 | 12 | 13 | 14 | 15 (vgl.) | 16 (Vgl.) | 17 (Vgl.) |
|---|---|---|---|---|---|---|---|---|---|
| TPS | | | | | | | 84.0 | | John-acryl scx-817 1) |
| IPS | 89.0 | 87.0 | 89.0 | 98.0 | 93.0 | 100 | 14.0 | 90 | |
| ADI | | | | | 5.0 | | 2.0 | | |
| CHDS | 10.0 | 10.0 | 10.0 | | | | | 10 | |
| TMA | 1.0 | 3.0 | 1.0 | 2.0 | 2.0 | | | Polyester harz gemäss DE 40 32 855 | |
| NPG | 81.0 | 81.9 | 84.0 | 80.6 | 84.9 | 79.2 | 87.8 | | |
| EG | | | | | | | 7.0 | | |
| HD | 5.0 | 5.0 | 5.0 | | 3.0 | 5.0 | | | |
| C₁₂₋₁₄ Diol | | | | 7.0 | | | | | |
| TMP | 3.0 | 3.0 | 1.0 | 2.0 | 2.0 | 4.0 | | 6 | |
| SZ | 51 | 52 | 50 | 51 | 48 | 52 | 33 | 50 | 55 |
| SV | 29 | 34 | 12 | 9 | 18 | 38 | 35 | 42 | |
| TG_{PES} | 58 | 59 | 58 | 54 | 54 | 63 | 64 | 64 | 68 |
| TG_{PL} | 55 | 56 | 56 | 50 | 51 | 60 | 61 | 61 | 65 |
| I10' | (160) 18.08 | (160) 18.08 | (160) 18.08 | (160) 18.08 | (160) 18.08 | (160) 18.08 | (160) 18.08 | (<10) <1,13 | (<10) <1,13 |
| 120' | (160) 18,08 | (160) 18.08 | (160) 18.08 | (160) 18,08 | (160) 18,08 | (160) 18,08 | (160) 18.08 | (<10) <1,13 | (<10) <1,13 |
| E10' | 10 | 10 | 4.3 | 10 | 7.2 | 10 | 10 | <1 | <1 |
| E20' | 10 | 10 | 5.6 | 10 | 8.8 | 10 | 10 | <1 | <1 |
| VERL | 3-4 | 4 | 2 | 1-2 | 2-3 | 5 | 2 | 3 | 3 |
| QUV | 710 | 595 | 700 | 790 | 750 | 870 | 330 | 790 | 1800 |

| | | | | | | | | | |
|---|---|---|---|---|---|---|---|---|---|
| 1) Carboxylfunktionelles Acrylatharz der Fa. SC Johnson Polymer, USA Angaben in Mol-% | | | | | | | | | |

### Bestandteile und Prüfkenngrössen

- TPS: = Terephthalsäure
- IPS: = Isophthalsäure
- ADI: = Adipinsäure
- CHDS: = Cyclohexandicarbonsäure
- TMA: = Trimellithsäureanhydrid
- NPG: = Neopentylglykol
- EG: = Ethylenglykol
- HD: = Hexandiol -1,6
- C₁₂₋₁₄Diol =: techn. Gemisch
- TMP: = SZ =
- Trimethylolpropan: Säurezahl (mg KOH/g)
- sv =: Schmelzviskosität bis 160°C (JCJ-Platte/Kegel) in Pa.s
- T_{G}PES =: Glasumwandlungstemperatur PES
- T_{G}PL =: Glasumwandlungstemperatur von Pulverlack
- I 10' =: Schlagfestigkeit Nm (inch pound) (ASTM D 2794)
- I 20' =: Schlagfestigkeit Nm (inch pound) (ASTM D2794)
- E 10' =: Erichsentiefung, mm (DIN 53 156)
- E 20' =: - "-
- VERL =: Visuelle Verlaufsbeurteilung: 1 bis 5 (1 = bester Verlauf)
- QUV =: Schnellbewitterungstest (Atlas QUV-Gerät) UVB Belichtung in Stunden bis zu 50 % Restglanz

Aus dem Vergleich der Beispiele 1 bis 17 ist sehr gut erkennbar, dass die Zielsetzung der Erfindung, nämlich die Bereitstellung eines epoxidfreien und damit eines toxikologisch unbedenklichen Beschichtungssystems mit sehr guter Witterungsbeständigkeit, genügender Lagerstabilität sowie sehr guten Verlauf- und mechanischen Eigenschaften besonders durch Beispiele 1, 12 und 13 optimal in einem Produkt erreicht wird. Im weiteren ist aus den Vergleichsbeispielen 2 und 3 zu ersehen, dass bereits ein Anteil von nur 10 Mol% einer aromatischen Dicarbonsäure, z.B. Terephthalsäure, eine deutliche Verschlechterung der UVB-Beständigkeit verursacht.

Vergleichsbeispiel 16 enthält ein carboxylfunktionelles Polyesterharz nach dem Stand der Technik, für welches neben einem sehr hohen Isophthalsäureanteil und etwa 10 Mol-% Cyclohexandicarbonsäure als Vernetzer Trisglycidylisocyanurat gemäss DE-A-40 32 855 vorgeschlagen wird. Obwohl dieses Poly-esterharz sehr gute Voraussetzungen für eine hohe Witterungsbeständigkeit aufweist, sind bei Verwendung der toxikologisch unbedenklichen Vernetzer-Komponente Primid® XL-552 die lacktechnischen Eigenschaften völlig ungenügend. Es war daher überraschend und nicht voraussehbar, dass die erfindungsgemässen speziellen carboxylfunktionellen Polyesterharze mit ihren hohen Isophthalsäureanteilen in Kombination mit Primid® XL-552 neben der sehr guten Witterungsbeständigkeit auch ausgezeichnete lacktechnische Eigenschaften aufweisen.

In Vergleichsbeispiel 17 wird ein carboxylgruppenfunktionelles Acrylatharz der Firma SC Johnson Polymer, USA, mit Primid XL-552 als Vernetzer beschrieben. Dieses System weist die für Acrylatharze bekannte sehr gute Witterungsbeständigkeit auf, ist jedoch lacktechnisch völlig ungenügend.

Somit vereinigt keines der Vergleichsbeispiele 16 und 17 die Zielsetzung der vorliegenden Erfindung, nämlich toxikologische Unbedenklichkeit bei sehr guter Witterungsbeständigkeit, guten lacktechnischen Eigenschaften und guter Lagerstabilität.

## Patentansprüche

1. Wärmehärtbares epoxidgruppenfreies Beschichtungssystem auf Basis von carboxylfunktionellen Polyesterharzen und β-Hydroxyalkylamiden sowie gegebenenfalls weiteren üblichen Additiven, wobei das Beschichtungssystem als Bindemittelharz (a) mindestens einen gesättigten Polyester mit einer Säurezahl von 15 bis 75 mg KOH/g, einer OH-Zahl von maximal 10 mg KOH/g und einer Glasumwandlungstemperatur von größer als 45°C, welcher aus
- 80 bis 100 Mol-% Isophthalsäure, die durch 0 bis 20 Mol-% einer oder mehrerer weiteren Dicarbonsäuren aus der Gruppe aliphatischer Dicarbonsäuren und cycloaliphatischer Dicarbonsäuren, bezogen auf die Gesamtmenge der Dicarbonsäure, ersetzt sein kann, und
- aliphatischen Diolen, welche bezogen auf die Gesamtmenge der Diole, zu 0 bis 10 Mol-% aus mindestens einem linearen aliphatischen Diol mit mindestens 4 C-Atomen, zu mindestens 50 Mol-% aus mindestens einem verzweigten aliphatischen Diol mit mindestens 4 C-Atomen, zu maximal 50 Mol-% aus mindestens einem Diol aus der Gruppe linearer aliphatischer Diole mit weniger als 4 C-Atomen und/oder cycloaliphatischen Diolen bestehen,
- sowie bis zu 6 Mol-% einer Kombination der trifunktionellen Monomere Trimethylolpropan und Trimellithsäureanhydrid, bezogen auf die Gesamtmenge von Dicarbonsäuren und Diolen, aufgebaut ist,
und als Vernetzer (b) mindestens ein Hydroxyalkylamid mit mindestens zwei Hydroxyalkylamidgruppen, enthält.

2. Beschichtungssystem gemäß Anspruch 1, dadurch gekennzeichnet, daß pro Carboxylgruppe im Bindemittelharz (a) zwischen 0,5 und 1,5 β-Hydroxyalkylamid-Gruppen des Vemetzers (b) zur Verfügung stehen.

3. Beschichtungssystemgemäß Anspruch 1 oder 2, dadurch gekennzeichnet, daß der Vernetzer (b) ein polyfunktionelles ß-Hydroxyalkylamid der allgemeinen Formel (I) ist, 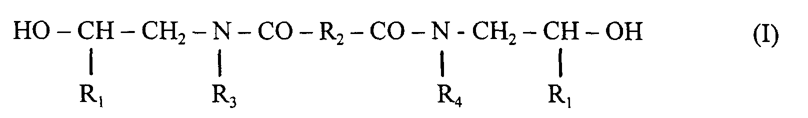 in der
R₁ gleiche oder verschiedene Alkylreste mit 1 bis 4 C-Atomen oder Wasserstoff,
R₂ ein aliphatischer, cycloaliphatischer, araliphatischer oder aromatischer Rest,
R₃ und R₄ 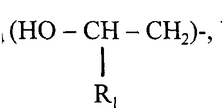 Wasserstoff oder gleiche oder unterschiedliche Alkylreste mit 1 bis 4 C-Atomen sind.

4. Beschichtungssystem gemäß Anspruch 1 und 2, dadurch gekennzeichnet, daß die weitere Dicarbonsäure eine aliphatische Dicarbonsäure mit 6 bis 12 C-Atomen, bevorzugt Adipinsäure, Azelainsäure, Sebazinsäure und Dodecandi-Säure oder eine cycloaliphatische Dicarbonsäure mit 8 bis 22 C-Atomen ist.

5. Beschichtungssytem gemäß Anspruch 4, dadurch gekennzeichnet, daß die weitere Dicarbonsäure Cyclohexandicarbonsäure ist.

6. Beschichtungssystem gemäß Anspruch 1 und 2, dadurch gekennzeichnet, daß das lineare aliphatische Diol mit mindestens 4 C-Atomen ein Diol mit 4 bis 22 C-Atomen ist.

7. Beschichtungssystem gemäß Anspruch 6, dadurch gekennzeichnet, daß das lineare aliphatische Diol Hexandiol-1,6 und/oder Diole mit 12 bis 20 C-Atomen sind.

8. Beschichtungssystem gemäß Anspruch 1 und 2, dadurch gekennzeichnet, daß das verzweigte aliphatische Diol Dimethyl-1,3-propandiol ist.

9. Beschichtungssystem gemäß einem der voranstehenden Ansprüche, dadurch gekennzeichnet, daß der Anteil der linearen aliphatischen Diole mit mindestens 4 C-Atomen mindestens 2 Mol-% beträgt.

10. Beschichtungssystem gemäß Anspruch 9, dadurch gekennzeichnet, daß der Anteil der linearen aliphatischen Diole 3 bis 7 Mol-% beträgt.

11. Beschichtungssystem gemäß Anspruch 1 und 2, dadurch gekennzeichnet, daß der Vemetzer (b)
Bis [N, N' - di (β-hydroxyethyl)] - adipamid oder
Bis [N, N' - di (β-hydroxypropyl)] - adipamid ist.

12. Verfahren zur Herstellung von wärmehärtbaren, epoxidgruppenfreien Beschichtungssystemen auf Basis von carboxylfunktionellen Polyesterharzen gemäß einem der Ansprüche 1 bis 11, dadurch gekennzeichnet, daß die Komponenten a), b) und gegebenenfalls weitere übliche Additive des Beschichtungssystems gemäß Anspruch 1 bis 11 in der Schmelze bei 80 bis 130°C gemischt, ausgetragen, granuliert, gemahlen und auf eine Korngröße von kleiner als 90 um abgesiebt werden.

13. Verwendung des Beschichtungssystems gemäß den Ansprüchen 1 bis 11 zur Herstellung von Pulverlacken.

14. Verwendung des Beschichtungssystems gemäß den Ansprüchen 1 bis 11 zur Herstellung von Schutzschichten nach dem triboelektrischen oder dem Corona-Pulversprühverfahren oder dem Wirbelsinterverfahren.

15. Schutzschicht, herstellbar aus dem Beschichtungssystem gemäß den Ansprüchen 1 bis 11.

## Claims

1. Heat-curable coating system or composition respectively free of epoxy groups on the basis of carboxyl-functional polyester resins and β-hydroxyalkylamides and, where appropriate, other customary additives, the coating composition containing as the binder resin (a) at least one saturated polyester having an acid number of 15 to 75 mg KOH per gramme, an OH number of at most 10 mg KOH per gramme, and a glass transition temperature of more than 45 °C, synthesized from
- 80 to 100 mole % of isophthalic acid which can be replaced by 0 to 20 mole % of one or more further dicarboxylic acids from the group of aliphatic dicarboxylic acids and cycloaliphatic dicarboxylic acids, referred to the total amount of dicarboxylic acid, and
- aliphatic diols which, relative to the total amount of diols, consist to the extent of 0 to 10 mole % of at least one linear aliphatic diol with at least four C atoms, to the extent of at least 50 mole % of at least one branched aliphatic diol with at least four C atoms, to the extent of at most 50 mole % of at least one diol from the group of linear aliphatic diols with less than four C atoms and/or cycloaliphatic diols,
- as well as up to the extent of 6 mole % of a combination of the trifunctional monomers trimethylolpropane and trimellitic anhydride, referred to the total amount of dicarboxylic acids and diols,
and as the cross-linking agent (b) at least one hydroxyalkylamide with at least two hydroxyalkylamide groups.

2. Coating composition according to claim 1, characterized in that between 0.5 and 1.5 β-hydroxyalkylamide groups of the cross-linking agent (b) are available per carboxyl group in the binder resin (a).

3. Coating composition according to claim 1 or 2, characterized in that the cross-linking agent (b) is a polyfunctional β-hydroxyalkylamide of the general formula (I) 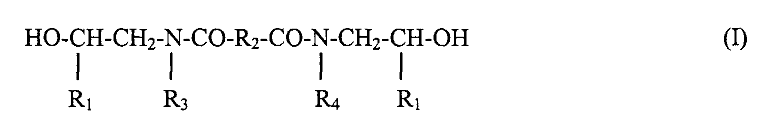 where
R₁ are like or different alkyl residues with one to four C atoms or hydrogen,
R₂ is an aliphatic, cycloaliphatic, araliphatic or aromatic residue,
R₃ and R₄ are 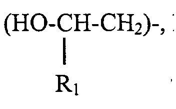 hydrogen, or like or different alkyl residues with one to four C atoms.

4. Coating composition according to claims 1 and 2, characterized in that the further dicarboxylic acid is an aliphatic dicarboxylic acid with 6 to 12 C atoms, preferably adipic acid, azelaic acid, sebacic acid or dodecanedioic acid or a cycloaliphatic dicarboxylic acid with 8 to 22 C atoms.

5. Coating composition according to claim 4, characterized in that the further dicarboxylic acid is cyclohexanedicarboxylic acid.

6. Coating composition according to claims 1 and 2, characterized in that the linear aliphatic diol with at least four C atoms is a diol with 4 to 22 C atoms.

7. Coating composition according to claim 6, characterized in that the linear aliphatic diol is 1,6-hexanediol and/or diols with 12 to 20 C atoms.

8. Coating composition according to claims 1 and 2, characterized in that the branched aliphatic diol is dimethyl-1,3-propanediol.

9. Coating composition according to one of the preceding claims, characterized in that the share of the linear aliphatic diols with at least four C atoms is at least 2 mole %.

10. Coating composition according to claim 9, characterized in that the share of the linear aliphatic diols is 3 to 7 mole %.

11. Coating composition according to claims 1 and 2, characterized in that the cross-linking agent (b) is
bis[*N*,*N*'-di(β-hydroxyethyl)]adipamide or
bis[*N*,*N*'-di(β-hydroxypropyl)]adipamide.

12. Process for making heat-curable coating compositions without epoxy groups on the basis of carboxyl-functional polyester resins according to one of the claims 1 to 11, characterized in that the components a and b and, where appropriate, further customary additives of the coating composition according to claims 1 to 11 are mixed in the melt at 80 to 130 °C, discharged, granulated, ground, and sifted to a grain size of less than 90 µm.

13. Use of the coating composition according to claims 1 to 11 for making powder coatings.

14. Use of the coating composition according to claims 1 to 11 for making protective coatings using the triboelectric or corona powder spray or fluidized-bed coating process.

15. Protective coating that can be made according to claims 1 to 11.

## Revendications

1. Système de revêtement sans groupe époxyde, thermodurcissable, à base de résine de polyester à fonctionnalité carboxyle et de β-hydroxyalkylamides, ainsi que, le cas échéant, d'autres additifs usuels, le système de revêtement contenant, à titre de résine formant liant (a), au moins un polyester saturé ayant un'indice d'acide de 15 à 75 mg KOH/g, un indice OH maximal de 10 mg KOH/g et une température de conversion vitreuse supérieure à 45°C, qui est constitué de
- 80 à 100 moles % d'acide isophtalique, pouvant être remplacé par 0 à 20 moles % d'un ou plusieurs autres acides bicarbonés issus du groupe des acides bicarbonés aliphatiques et d'acides bicarbonés cylcloaliphatiques, en se référant à la quantité globale d'acide bicarboné, et
- de diols aliphatiques qui, par rapport à la quantité globale des diols, sont constitués de 0 à 10 moles % d'au moins un diol aliphatique linéaire avec au moins 4 atomes C, d'au moins 50 moles % d'au moins un diol aliphatique ramifié ayant au moins 4 atomes C, d'au plus 50 moles % d'au moins un diol issu du groupe des diols aliphatiques linéaires ayant moins de 4 atomes C, et/ou de diols cycloaliphatiques,
- ainsi que jusqu'à 6 moles % d'une combinaison des monomères trifonctionnels que sont le triméthylolpropane et l'anidride d'acide trimellithique, en se référant à la quantité globale d'acides bicarbonés et de diols,
et, en tant que réticulant (b), contient au moins un hydroxyalkylamide ayant au moins deux groupes hydroxyalkylamide.

2. Système de revêtement selon la revendication 1, caractérisé en ce que, par groupe carboxyle dans la résine formant liant (a) sont fournis entre 0,5 et 1,5 groupes de β-hydroxyalkylamide du réticulant (b).

3. Système de revêtement selon la revendication 1 ou 2, caractérisé en ce que le réticulant (b) est un β-hydroxyalkylamide polyfonctionnel, de formule générale (I), 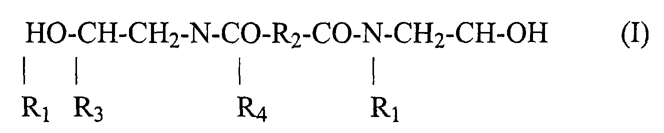 dans laquelle
R₁ sont des résidus alkyles identiques ou différents, ayant de 1 à 4 atomes C ou d'hydrogène.
R₂ est un résidus aliphatique, cycloaliphatique, araliphatique ou aromatique.
R₃ et R₄ sont 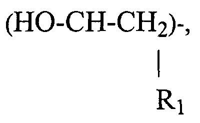 l'hydrogène ou des résidus alkyle identiques ou différents, ayant de 1 à 4 atomes de carbone C.

4. Système de revêtement selon les revendications 1 et 2, caractérisé en ce que l'autre acide bicarboné est un acide bicarboné aliphatique ayant de 6 à 12 atomes C, de préférence l'acide adipique, l'acide azélaïque, l'acide sébacique ou l'acide bicarboné-dodécanique, ou un acide bicarboné cylcloaliphatique ayant de 8 à 22 atomes C.

5. Système de revêtement selon la revendication 4, caractérisé en ce que l'autre acide bicarboné est l'acide cyclohexandicarboné.

6. Système de revêtement selon les revendications 1 et 2, caractérisé en ce que le diol aliphatique linéaire ayant au moins 4 atomes C est un diol ayant de 4 à 22 atomes C.

7. Système de revêtement selon la revendication 6, caractérisé en ce que le diol aliphatique linéaire est le 1,6-hexandiol et/ou sont des diols ayant de 12 à 20 atomes C.

8. Système de revêtement selon les revendications 1 et 2, caractérisé en ce que le diol aliphatique ramifié est le diméthyl-1,3 propandiol.

9. Système de revêtement selon l'une des revendications précédentes, caractérisé en ce que la proportion des diols aliphatiques linéaires ayant au moins 4 atomes C est d'au moins 2 moles %.

10. Système de revêtement selon la revendication 9, caractérisé en ce que la proportion des diols aliphatiques linéaires est de 3 à 7 moles % .

11. Système de revêtement selon les revendications 1 et 2, caractérisé en ce que le réticulant (b) est le
bis [N, N' - di(β-hydroxyéthyl)]-adipamide, ou le
bis [N, N' - di(β-hydroxypropyl)]-adipamide.

12. Procédé de préparation de systèmes de revêtement sans groupe époxyde, thermodurcissables, à base de résines de polyester à fonctionnalité carboxyle, selon l'une des revendications 1 à 11, caractérisé en ce que les composants a), b) et, le cas échéant, d'autres additifs usuels du système de revêtement selon les revendications 1 à 11, sont mélangés dans la masse en fusion, à une température de 80 à 130°C, sont extraits, granulés, broyés et tamisés pour obtenir une taille de grains inférieure à 90 µm.

13. Utilisation du système de revêtement selon les revendications 1 à 11 pour la préparation de laques en poudre.

14. Utilisation du système de revêtement selon les revendications 1 à 11, pour la préparation de couches de protection selon le procédé à pulvérisation de poudre triboélectrique ou corona, ou bien le procédé à trempage dans la poudre fluidisée.

15. Couche de protection, pouvant être préparée à partir du système de revêtement selon les revendications 1 à 11.
